# EUROPEAN PATENT APPLICATION

(11) **EP 0 788 998 A1**
(43) Date of publication of application: **13.08.1997**
(21) Application number: 97100444.5
(22) Date of filing: 14.01.1997
(51) Int. Cl.: C01B 15/027

(54) **Process for the preparation of hydrogen peroxide**

(30) Priority: 08.02.1996 IT MI960233
(71) Applicant: ENICHEM S.p.A., I-20124 Milano (IT)
(72) Inventor: Bortolo, Rossella, 28100 Novara (IT); D'Aloisio, Rino, 28067 Pernate (Novara) (IT); Bianchi, Daniele, 20020 Arese (Milano) (IT)
(74) Representative: Gennari, Marco

(57) **Abstract**

Process for the preparation of hydrogen peroxide starting from carbon monoxide, oxygen and water, in the presence of a soluble compound of palladium as catalyst, an arsine or phosphine as ligand, a non-coordinating acid and an organic solvent, characterized in that the solubility of the water in said solvent is between 0.025% and 0.035%.

## Description

The present invention relates to a process for the preparation of hydrogen peroxide.

More specifically, the present invention relates to a process for the preparation of hydrogen peroxide starting from carbon monoxide, oxygen and water, essentially without gaseous hydrogen, in the presence of a soluble compound of palladium as catalyst, an arsine or phosphine as ligand, a non-coordinating acid and an organic solvent.

Hydrogen peroxide is a commercially important product which is widely used as bleach and in oxidation reactions. Industrially, hydrogen peroxide is mainly produced by the alternating oxidation and reduction of alkylanthraquinones.

Various other processes for the preparation of hydrogen peroxide are described in the art. For example, U.S. patent 4.711.772 describes a process for the preparation of hydrogen peroxide which comprises the reaction of carbon monoxide, water and oxygen, in the presence of a soluble compound of palladium as catalyst, an arsine or phosphine as ligand and an organic solvent. Among organic solvents chlorinated hydrocarbons such as, for example, chloroform, dichloromethane, 1,2-dichloroethane and, preferably, 1,2,4-trichlorobenzene and fluorinated hydrocarbons such as, for example, monofluorobenzene and hexafluorobenzene, can be mentioned.

The reaction is carried out in double phase using an organic solvent and an acid water phase because of sulfuric acid. The type of solvent used is extremely important for the development of the reaction even if the role of the solvent itself is not specified in the above patent.

The Applicant on the other hand has now identified a correlation between the solubility of water in the organic solvent and the yield of hydrogen peroxide. In fact, as water is a reaction reagent it must be present in a sufficient quantity in the organic phase in which there is also the synthesis catalyst and in which the synthesis reaction of hydrogen peroxide takes place. The presence of an excess of water and, consequently of hydrogen peroxide, in the organic phase favours, however, the oxidation reaction of the ligand with the consequent destruction of the hydrogen peroxide and deactivation of the catalyst. It is therefore necessary to select an organic solvent capable of sufficiently dissolving water to create the reaction but at the same time minimizing the oxidation values of the ligand.

The Applicant has now surprisingly found that the use of some organic solvents such as chlorobenzene or chloronaphthalene, in particular chlorobenzene, considerably improves the yield of the above process and minimizes the oxidation of the ligand. The Applicant has also set up a system which allows the oxidated ligand to be regenerated and recycled into the reaction thus creating a "consecutive cycles" process in which the ligand can be reused in an indefinite number of cycles without any deterioration of the catalytic activity.

The present invention therefore relates to a process for the preparation of hydrogen peroxide starting from carbon monoxide, oxygen and water, in the presence of a soluble compound of palladium as catalyst, an arsine or phosphine as ligand, a non-coordinating acid and an organic solvent, characterized in that the solubility of the water in said solvent is between 0.025% and 0.035%.

Organic solvents which can be used in the process of the present invention are, for example, chlorobenzene, chloronaphthalene, preferably chlorobenzene.

Catalysts which are useful for the process of the present invention are soluble compounds of palladium such as, for example, palladium acetate, palladium nitrate, palladium 2,4-pentanedionate, palladium sulfate, preferably palladium acetate.

The concentration of the catalyst is between 0.001 and 0.5 moles of catalyst per litre of solution, preferably between 0.001 and 0.01 moles of catalyst per litre of solution.

Ligands which can be used in the process of the present invention are triaryl arsines such as, for example, triphenyl arsine, tris (p-fluorophenyl) arsine, tris (p-trifluoromethylphenyl) arsine, preferably triphenyl arsine. Also suitable for the purpose are some triaryl phosphines with electron withdrawing groups such as, for example, pentafluoro phenyl diphenyl phosphine, bis(pentafluoro phenyl) phenyl phosphine, tris (p-trifluoro methyl phenyl) phosphine.

The concentration of ligand used is such as to have a molar ratio ligand/palladium of at least 10/1, preferably between 20/1 and 100/1.

Non-coordinating acids which can be used in the process of the present invention are, for example, trifluoromethanesulfonic acid, p-toluenesulfonic acid, tetrafluoroboric acid, sulfuric acid, acetic acid, preferably sulfuric acid.

The molar ratio non-coordinating acid/palladium is at least 10/1, preferably between 20/1 and 100/1, more preferably 40/1.

A sufficient quantity of reaction gases, carbon monoxide and oxygen, is added during the reaction in order to maintain a pressure of more than 1 atm. The molar ratio CO/O₂ is between 1/100 and 50/100, preferably between 1/100 and 1/10.

The above process can also be carried out in the presence of air instead of pure oxygen.

The process of the present invention is carried out at a temperature of between -78°C and +150°C, preferably between -20°C and +50°C.

The process of the present invention can be carried out in a single step, or with "consecutive cycles" (batch process).

When the process of the present invention is carried out with "consecutive cycles" (batch process) the oxidated ligand is regenerated and recycled into the reaction.

According to a preferred embodiment, the process of the present invention is carried out under the following operating conditions.

When the process is carried out with "consective cycles", the soluble compound of palladium (catalyst) and the ligand are dissolved in chlorobenzene and the solution is left under stirring for a time of not less than 30 minutes to guarantee the complete formation of the complex (palladium/ligand). Water and sulfuric acid are added to this solution. The biphasic system obtained, is transferred to an autoclave, which is subsequently closed and pressurized with 3 atm. of carbon monoxide and 62 atm. of oxygen, and left to react, under vigorous stirring, at 25°C. After 30 minutes, the autoclave is depressurized and the water phase containing the hydrogen peroxide and oxidated ligand is separated from the organic phase consisting of chlorobenzene containing the catalyst and excess ligand.

The water phase is treated several times with dichloroethane to extract the oxidated ligand. The residual water solution, containing the hydrogen peroxide at an average concentration of 1.25%, can be used directly or can be further concentrated using techniques known in the art as described, for example, in German patents 2.233.159, 2.125.199 and 1.945.754.

The organic phase (dichloroethane), containing the oxidated ligand, is transferred to a suitable reactor and a water solution at 15% in sulfuric acid and 0.25% of potassium iodide is added. Sulfur dioxide is bubbled into the solution, under vigorous stirring, for at least 2 hours, in order to reduce the oxidated ligand. After flushing by bubbling in nitrogen, the organic phase (dichloroethane) is separated and decoloured on a silica bed and dried, thus obtaining the regenerated ligand.

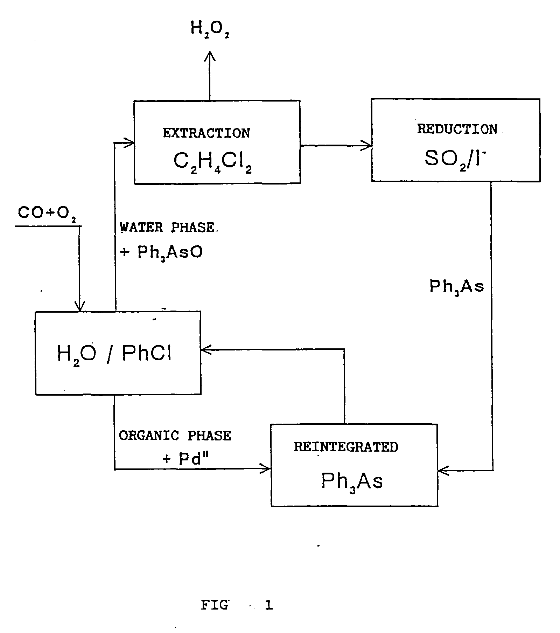

The regenerated ligand is reintegrated in the organic phase, residual from the first synthesis cycle of hydrogen peroxide, consisting of chlorobenzene containing the catalyst and excess ligand. Water and sulfuric acid are added to the solution and the whole mixture is transferred to an autoclave which is subsequently closed and pressurized with 3 atm. of carbon monoxide and 62 atm. of oxygen. The process is then repeated identically for a high number of cycles, as shown in the diagram of Fig. 1, obtaining for each cycle hydrogen peroxide at an average concentration of 1.25%.

When the process of the present invention is carried out in a single step, the operating conditions are the same as those specified above for the "consecutive cycles" process, with the difference that, as the ligand is not regenerated, the reaction time is 1 hour instead of 30 minutes, as the reaction is carried out so as to obtain the maximum possible yield. At the end of the above single-step process, an average concentration of hydrogen peroxide of 2.1% is obtained.

Some examples are provided for a better understanding of the present invention and for its embodiment, which are purely illustrative and do not limit the scope of the invention itself.

### EXAMPLE 1

### Reaction with chlorobenzene

5.6 mg (0.025 mmoles) of palladium acetate and 612 mg (2 mmoles) of triphenylarsine dissolved in 10 ml of chlorobenzene are dissolved in an autoclave equipped with a glass phial and magnetic stirring, maintained under stirring, at room temperature, for at least 30 minutes. 8 ml of water and 100 mg (1 mmole) of concentrated sulfuric acid are added to the yellow solution thus obtained.

The autoclave is closed and charged with 3 atm. of carbon monoxide and 62 atm. of oxygen. The reaction is carried out at a temperature equal to 25°C, the whole mixture being maintained under vigorous stirring. After 1 hour, the autoclave is depressurized and the water phase is titrated with permanganate to determine the concentration of hydrogen peroxide which proves to be equal to 2.1%, corresponding to a turn-over of the palladium of 197.

### EXAMPLE 2

### Reaction with different solvents

The reaction described in Example 1, is repeated under the same operating conditions using different solvents, capable of dissolving an increasing quantity of water, as shown in Table 1.

The reaction is interrupted by depressurizing the autoclave after a time corresponding to the maximum turn-over value of the palladium.

The water phase is titrated with permanganate to determine the concentration of hydrogen peroxide produced. The values relating to each solvent are shown in Table 1.

The values indicated in Table 1 clearly show that the solvents which allow the best performance are chlorobenzene and chloronaphthalene.

**TABLE 1**

| SOLVENT | TNₘₐₓ⁽¹⁾ | Sol.H₂O⁽²⁾ |
|---|---|---|
| Chlorononane | 4 | 0.011 |
| nonylbenzene | 2 | 0.012 |
| carbon tetrachloride | 12 | 0.013 |
| 1,3,4-trichlorobenzene | 76 | 0.022 |
| chloronaphthalene | 120 | 0.025 |
| chlorobenzene | 197 | 0.032 |
| p-xylene | 35 | 0.046 |
| benzene | 66 | 0.063 |
| dichloropropane | 62 | 0.132 |
| 1,2-dichloroethane | 51 | 0.187 |
| dichloromethane | 18 | 0.200 |
| nitrobenzene | 49 | 0.240 |
| butylphthalate | 3 | 0.460 |
| teramylic alcohol | 3 | 23.5 |

| | | |
|---|---|---|
| (1) = maximum turn-over of palladium; | | |
| (2) = solubility of water in the organic solvent | | |

### EXAMPLE 3

### Reaction in the presence of air

The reaction is carried out under the same operating conditions described in Example 1, with the only difference that the autoclave is pressurized with 3 atm. of carbon monoxide and 62 atm. of air instead of oxygen. The reaction is carried out for 1 hour, then the water phase is titrated with permanganate to determine the concentration of hydrogen peroxide which proves to be 0.4%, corresponding to a turn-over of palladium of 38.

### EXAMPLE 4

### Reaction in chlorobenzene with "consecutive cycles" (batch process)

The reaction is carried out under the same operating conditions described in Example 1. After 30 minutes the autoclave is depressurized and the organic phase (chlorobenzene containing the catalyst and excess ligand) is separated from the water phase. The water phase is extracted several times with dichloroethane (total volume 10 ml). The residual water phase, containing hydrogen peroxide at a concentration of 1.3%, equal to a turn-over of palladium of 121, is removed. The dichloroethane phase, containing the oxidated ligand (0.4 mmoles, determined by gas-chromatography), is put in a small flask equipped with an aerator and stirrer. 5 mg (0.03 mmoles) of potassium iodide dissolved in 2 ml of a solution of sulfuric acid (H₂SO₄) at 15% are added to the above solution. The whole mixture is maintained under vigorous stirring, and the sulfur dioxide (SO₂) is bubbled into the reaction solution for at least 2 hours. After flushing by bubbling in nitrogen, the organic phase is separated and decoloured by passing it over a silica bed and washing with dichloroethane. The decoloured solution is then dried, obtaining 119 mg of triphenyl arsine, with a yield of 98%.

The solid triphenyl arsine obtained from the above treatment, is joined to the initial organic phase (chlorobenzene containing the catalyst and excess ligand). 8 ml of water and 100 mg (1 mmole) of concentrated sulfuric acid (H₂SO₄) are added to this. The system is put in an autoclave and pressurized with 3 atm. of carbon monoxide and 62 atm. of oxygen.

The reaction, maintained under stirring, is again interrupted after 30 minutes and the treatment described above is repeated.

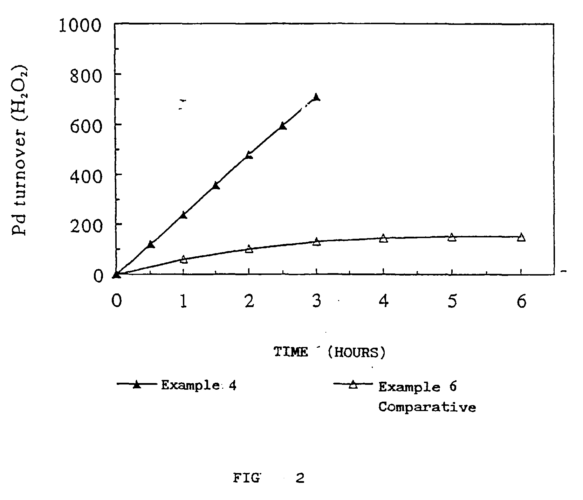

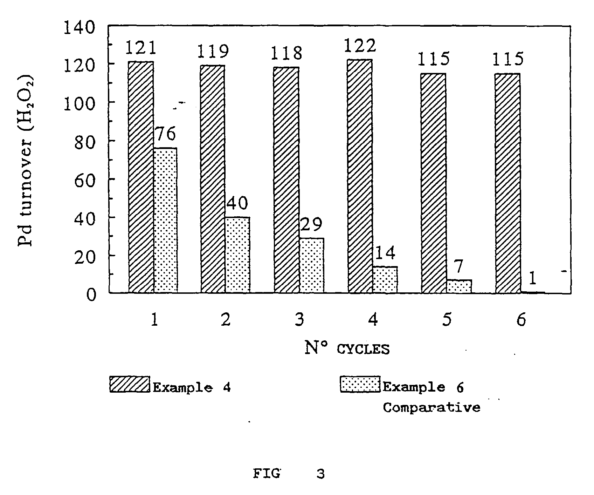

A concentration of hydrogen peroxide of 1.26% is obtained, corresponding to a turn-over of palladium of 119 for the second cycle, 1.25% corresponding to a turn-over of palladium of 118 for the third cycle, 1.3% corresponding to a turn-over of palladium of 122 for the fourth cycle, 1.22% corresponding to a turn-over of palladium of 115 for the fifth and sixth cycle. Operating under these conditions, the total turn-over of palladium is greater than 700 after 6 cycles as shown in Fig. 2 and Fig. 3.

The above "consecutive cycles" process, can be repeated for a high number of times obtaining, for each cycle, hydrogen peroxide at a concentration of about 1.25% without there being any significant decrease in the turn-over of the palladium. The "consecutive cycles" process (batch process) is schematized in Fig. 1.

### EXAMPLE 5

### Comparative example (single step)

The reaction described in Example 1 is repeated under the same operating conditions but using 1,2,4-trichlorobenzene (instead of chlorobenzene) as solvent and depressurizing the autoclave after 2 hours (instead of 1 hour) as described in Example 2 of U.S. patent 4.711.772.

The water phase is separated and titrated with permanganate to determine the concentration of hydrogen peroxide which proves to be 0.9%, corresponding to a turn-over of palladium of 87. Table 2 shows the values obtained operating as described in Example 2 above (process carried out according to the present invention) and Example 5 above (comparative).

**TABLE 2**

| Ex. Nr. | SOLVENT | T.N.ₘₐₓ⁽¹⁾ | Conc.H₂O₂ (%) | H₂O₂/Ph₃AsO⁽²⁾ |
|---|---|---|---|---|
| 2 | (chlorobenzene) | 197 | 2.2 | 7.3 |
| 5 | (1,2,4-trichlorobenzene) | 87 | 0.9 | 1.7 |

| | | | | |
|---|---|---|---|---|
| (1) = maximum turn-over of palladium referring to a single cycle. | | | | |
| (2) = ratio between the concentration of H₂O₂ produced and the concentration of the oxidated ligand during the reaction. | | | | |

The data indicated in Table 2 show that with the process of the present invention an increase in the production of hydrogen peroxide is obtained equal to 2.26% and a decrease in the undesired oxidation reaction of the ligand equal to 77%.

### EXAMPLE 6

### Comparative example ("consecutive cycles")

The reaction is repeated operating under the same operating conditions described in Example 4 but using 1,2,4-trichlorobenzene (instead of chlorobenzene) as solvent as described in U.S. patent 4.711.722 and depressurizing the autoclave after 1 hour (instead of 30 minutes).

The water phase is separated and titrated with permanganate and proves to contain hydrogen peroxide at a concentration of 0.8% corresponding to a turn-over of palladium of 76.

The residual organic phase is again charged into the autoclave without any treatment and 8 ml of water and 100 mg of concentrated sulfuric acid are added. The reactor is pressurized with 3 atm. of carbon monoxide and 62 atm. of oxygen and the reaction is carried out for a further hour. The autoclave is then again depressurized and the two phases, organic and water, are separated.

The water phase is titrated with permanganate and proves to contain hydrogen peroxide at a concentration of 0.45% corresponding to a turn-over of 40.

The cycle is repeated 6 times each time charging the residual organic phase without further treatment and adding 8 ml of water and 100 mg of concentrated sulfuric acid to the water phase. The hydrogen peroxide produced gradually decreases with each cycle, as shown in Fig. 2 and Fig. 3, until it is reduced to zero in the sixth cycle.

## Claims

1. A process for the preparation of hydrogen peroxide starting from carbon monoxide, oxygen and water, in the presence of a soluble compound of palladium as catalyst, an arsine or phosphine as ligand, a non-coordinating acid and an organic solvent, characterized in that the solubility of the water in said solvent is between 0.025% and 0.035%.

2. The process according to claim 1, wherein the organic solvent is selected from chlorobenzene and chloronaphthalene.

3. The process according to claim 2, wherein the organic solvent is chlorobenzene.

4. The process according to any of the previous claims, wherein the catalyst is a soluble compound of palladium.

5. The process according to claim 4, wherein the soluble compound of palladium is selected from palladium acetate, palladium nitrate, palladium 2,4-pentanedionate, palladium sulfate.

6. The process according to claim 5, wherein the soluble compound of palladium is palladium acetate.

7. The process according to any of the previous claims, wherein the concentration of the catalyst is between 0.001 and 0.5 moles of catalyst per litre of solution.

8. The process according to claim 7, wherein the concentration of catalyst is between 0.001 and 0.01 moles of catalyst per litre of solution.

9. The process according to any of the previous claims, wherein the ligand is a triaryl arsine.

10. The process according to claim 9, wherein the ligand is selected from triphenyl arsine, tris (p-fluorophenyl) arsine, tris (p-trifluoromethylphenyl) arsine.

11. The process according to claim 10, wherein the ligand is triphenyl arsine.

12. The process according to any of the previous claims, wherein the concentration of ligand used is such as to have a molar ratio ligand/palladium of at least 10/1.

13. The process according to any of the previous claims, wherein the concentration of ligand used is such as to have a molar ratio ligand/palladium of between 20/1 and 100/1.

14. The process according to any of the previous claims, wherein the non-coordinating acid is selected from trifluoromethanesulfonic acid, p-toluenesulfonic acid, tetrafluoro boric acid, sulfuric acid, acetic acid.

15. The process according to claim 14, wherein the non-coordinating acid is sulfuric acid.

16. The process according to any of the previous claims, wherein the molar ratio non-coordinating acid/palladium is at least 10/1.

17. The process according to any of the previous claims, wherein the molar ratio non-coordinating acid/palladium is between 20/1 and 100/1.

18. The process according to claim 17, wherein the molar ratio non-coordinating acid palladium is 40/1.

19. The process according to any of the previous claims, wherein carbon monoxide and oxygen are added during the reaction to maintain the pressure higher than 1 atm.

20. The process according to claim 19, wherein the molar ratio CO/O₂ is between 1/100 and 50/100.

21. The process according to claim 20, wherein the molar ratio CO/O₂ is between 1/100 and 1/10.

22. The process according to any of the previous claims, wherein the temperature is between -78°C and +150°C.

23. The process according to claim 22, wherein the temperature is between -20°C and +50°C.

24. The process according to any of the previous claims which is carried out with "consecutive cycles" and wherein the ligand is regenerated and recycled into the reaction.

25. The process according to any of the previous claims which is carried out in the presence of air instead of pure oxygen.
